(19) Europäisches Patentamt
European Patent Office
Office européen des brevets

(11) **EP 2 188 666 B1**

(12) **FASCICULE DE BREVET EUROPEEN**

(45) Date de publication et mention
de la délivrance du brevet:
**31.08.2016 Bulletin 2016/35**

(51) Int Cl.:
***G02C 7/02*** *(2006.01)*      ***G02C 7/06*** *(2006.01)*

(21) Numéro de dépôt: **08835236.4**

(22) Date de dépôt: **11.09.2008**

(86) Numéro de dépôt international:
**PCT/FR2008/051618**

(87) Numéro de publication internationale:
**WO 2009/044080 (09.04.2009 Gazette 2009/15)**

(54) **RÉALISATION D'UN VERRE OPHTALMIQUE DESTINÉ À UN PORTEUR**

HERSTELLUNG EINES AUF DEN TRÄGER ZUGESCHNITTENEN BRILLENGLASES

PRODUCTION OF AN OPHTHALMIC GLASS INTENDED FOR A WEARER

(84) Etats contractants désignés:
**AT BE BG CH CY CZ DE DK EE ES FI FR GB GR HR HU IE IS IT LI LT LU LV MC MT NL NO PL PT RO SE SI SK TR**

(30) Priorité: **12.09.2007 FR 0706388**

(43) Date de publication de la demande:
**26.05.2010 Bulletin 2010/21**

(73) Titulaire: **Essilor International (Compagnie Générale d'Optique) 94220 Charenton-le-Pont (FR)**

(72) Inventeurs:
• **DROBE, Bjorn**
**SINGAPORE 339346 (SG)**
• **MOUSSET, Soazic**
**F-94220 CHARENTON LE PONT (FR)**
• **PEDRONO, Claude**
**F-94220 CHARENTON LE PONT (FR)**

(74) Mandataire: **Cabinet Plasseraud 66, rue de la Chaussée d'Antin 75440 Paris Cedex 09 (FR)**

(56) Documents cités:
EP-A- 1 830 223      WO-A-01/62139
WO-A-2005/119346    WO-A-2006/072683
WO-A-2006/116820    FR-A- 2 863 857
FR-A- 2 894 688

• **JALIE M: "Progressive lenses part 2, the new generation" OPTOMETRY TODAY, ASSOCIATION OF OPTOMETRISTS, LONDON, GB, 17 juin 2005 (2005-06-17), pages 35-45, XP002406290 ISSN: 0268-5485**

EP 2 188 666 B1

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

## Description

La présente invention concerne la réalisation d'un verre ophtalmique pour une paire de lunettes qui est destinée à un porteur identifié.

Un verre ophtalmique dit «progressif» présente une variation de puissance optique lorsqu'un porteur de ce verre regarde successivement à travers une zone de vision de loin et une zone de vision de près du verre. Cette variation de puissance optique, appelée addition du verre, résulte de variations de courbure de l'une au moins des faces antérieure et postérieure du verre. L'Homme du métier parle alors d'additions respectives des faces antérieure et postérieure du verre, en plus de l'addition du verre considérée comme la combinaison des deux faces.

Il est connu de varier les additions respectives des faces antérieure et postérieure du verre tout en maintenant sensiblement constante l'addition du verre, cette dernière restant égale à ou proche de la valeur d'addition qui est prescrite pour le porteur. Une quantité d'astigmatisme résiduel qui est présente involontairement dans des parties latérales du verre peut ainsi être diminuée, en répartissant de façon adéquate les variations de courbure entre les deux faces du verre.

Il est aussi connu d'adapter la répartition d'un défaut de puissance optique et de l'astigmatisme en fonction d'une propension du porteur à bouger plutôt les yeux ou la tête lorsqu'il regarde successivement dans des directions différentes. On caractérise alors des amplitudes des mouvements d'yeux et de tête du porteur, puis on choisit en fonction de celles-ci un design de verre qui procure un confort supérieur au porteur. La largeur de la zone de vision de loin (resp. de près) du verre correspond à l'intervalle horizontal, pour la position standard d'utilisation du verre par le porteur, autour du point de vision de loin (resp. de près), dans lequel le défaut de puissance optique et/ou l'astigmatisme reste imperceptible, ou en dessous d'un seuil fixé. Un design correspondant à des zones de vision de loin et de près qui sont larges, mais avec des gradients importants de puissance et/ou d'astigmatisme, est sélectionné de préférence pour un porteur qui tourne plus les yeux que la tête. A l'inverse, un design à gradients faibles, mais avec des zones de vision étroites, est sélectionné de préférence pour un porteur qui tourne surtout la tête, plutôt que les yeux. Un verre progressif peut ainsi être attribué à chaque porteur, qui lui procure un bon confort quelque soit son comportement de bougeur d'yeux ou de tête.

Le document WO 2006/072683 A1 divulgue un procédé d'optimisation d'un verre ophtalmique progressif.

Mais il apparaît que le confort d'utilisation d'un verre progressif peut encore être amélioré.

Un but de la présente invention consiste donc à réaliser un verre progressif qui est dédié à un porteur, et qui lui apporte un confort accru. Notamment, l'invention a pour but de réduire la durée de la période d'accoutumance qui peut être ressentie par le porteur du verre.

En particulier, l'invention peut avoir pour but de réduire une sensation de tangage qui est perçu parfois par le porteur lorsqu'il utilise un verre progressif depuis peu de temps.

Pour cela, l'invention propose un procédé de réalisation d'un verre ophtalmique pour une paire de lunettes qui est destinée à un porteur identifié, le verre ayant une face antérieure et une face postérieure pouvant chacune présenter une addition, lequel procédé comprend les étapes récitées dans la revendication 1.

Des modes de réalisation additionels sont définis dans les revendications dépendantes.

Ainsi, selon l'invention, les valeurs d'addition des faces antérieure et postérieure du verre sont sélectionnées non seulement de façon à obtenir sensiblement la valeur d'addition du verre qui est prescrite, mais aussi pour adapter une caractéristique d'utilisation du verre en fonction des mouvements d'yeux et de tête du porteur. Cette adaptation de la caractéristique d'utilisation du verre correspond à une personnalisation du verre. Elle est effectuée pour améliorer une sensation du porteur qui intervient lorsqu'il change de direction de regard. De cette façon, un confort d'utilisation du verre est obtenu, qui est accru.

Selon le mode principal de mise en oeuvre de l'invention, la caractéristique qui est déterminée à l'étape /3/ de la revendication 1 est une variation d'un grossissement pour des directions différentes de regard du porteur à travers le verre. Cette variation de grossissement est alors sélectionnée en fonction de la perception qu'en a le porteur, pour lui procurer un confort accru.

Des variations du grossissement qui sont ressenties par le porteur peuvent lui procurer un désagrément, tel qu'une sensation de tangage voire une perturbation de l'équilibre. Les valeurs respectives d'addition des faces antérieure et postérieure du verre peuvent alors être sélectionnées à l'étape /4/ de façon à réduire ces variations du grossissement lorsque l'amplitude relative des mouvements de tête du porteur qui est caractérisée à l'étape /2/ est plus grande, par rapport à des variations du grossissement qui seraient obtenues pour une amplitude relative plus faible des mouvements de tête, pour une prescription en vision de loin et en addition qui sont identiques.

En particulier, la variation de grossissement peut être considérée, entre deux directions de regard du porteur qui traversent le verre respectivement au point de vision de loin et au point de vision de près. L'impression de tangage qui est due à la différence de grossissement entre la zone de vision de près et la zone de vision de loin est d'autant plus accentuée que le porteur bouge principalement la tête, plutôt que les yeux : l'écart de grossissement peut donc être réduit en utilisant l'invention pour ces porteurs. En revanche, afin de fournir un meilleur confort visuel en vision de près à un porteur qui bouge plus les yeux que la tête, le grossissement du verre dans la zone de vision de près peut être augmenté.

La valeur d'addition qui est sélectionnée pour la face antérieure du verre peut être plus petite lorsque l'amplitude relative des mouvements de tête du porteur est plus grande, par rapport à une valeur d'addition de la face antérieure qui serait sélectionnée pour une amplitude relative plus faible des mouvements de tête, pour une prescription en vision de loin et en valeur d'addition pour le verre qui sont identiques.

D'autres particularités et avantages de la présente invention apparaîtront dans la description ci-après d'exemples de réalisation non limitatifs, en référence aux dessins annexés, dans lesquels :

- les figures 1a et 1b sont respectivement des vues de face et de côté d'un verre de lunettes selon l'invention;

- les figures 2a et 2b illustrent un principe de mesure de mouvements d'yeux et de tête pour un porteur de lunettes ;

- la figure 3 est un exemple de table indiquant des valeurs d'addition de la face antérieure du verre, sélectionnées selon la présente invention ;

- les figures 4a et 4b sont respectivement des cartographies de sphère et de cylindre de la face antérieure d'un premier verre de lunettes réalisé selon l'invention, et destiné à un premier porteur qui bouge plus les yeux que la tête ;

- les figures 4c et 4d sont respectivement des cartographies de sphère et de cylindre de la face postérieure du premier verre des figures 4a et 4b;

- La figure 4e est une caractérisation de puissance optique du premier verre des figures 4a à 4d ;

- les figures 5a à 5e correspondent respectivement aux figures 4a à 4e, pour un autre verre de lunettes réalisé selon l'invention, et destiné à un second porteur qui bouge plus la tête que les yeux ; et

- les figures 6a, 6b, 7a, 7b, 8a, 8b d'une part, et 9a, 9b d'autre part, concernent deux verres supplémentaires réalisés selon un perfectionnement de l'invention.

L'invention est maintenant décrite en détail dans le cadre de la réalisation de verres ophtalmiques correcteurs du type verres de lunettes. Mais il est entendu que l'invention peut être appliquée à d'autres composants ophtalmiques qui réalisent une correction d'un défaut visuel, tels que des verres de masques de montagne ou de plongée aquatique notamment.

En outre, des verres de lunettes qui sont adaptés pour réaliser une correction de presbytie sont pris à titre d'exemples. Mais il est aussi entendu que l'invention peut être appliquée de façon similaire à un verre correcteur quelconque, quelque soit la nature du défaut visuel du porteur, dès lors que les faces du verre peuvent présenter des courbures variables. En outre, une correction quelconque d'astigmatisme peut être superposée de façon connue à la prescription de puissance qui est seule discutée dans la suite.

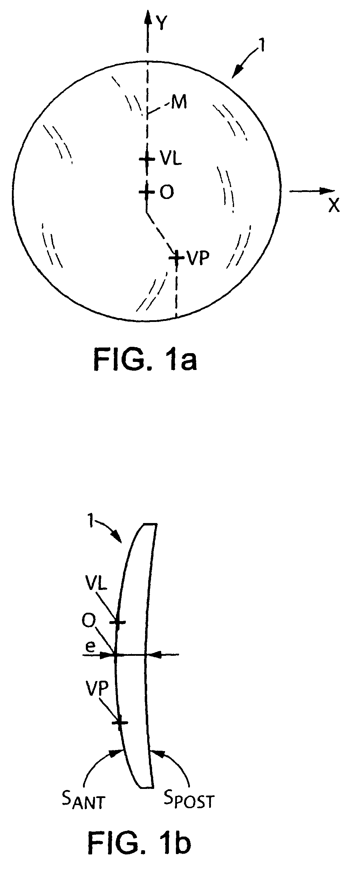

Usuellement, la correction qui est prescrite à un futur porteur de lunettes presbyte comprend au moins une valeur de puissance optique qui est déterminée dans des conditions de vision de loin, et une valeur d'addition du verre. La puissance optique de correction qui est nécessaire pour le porteur en vision de près est alors égale à la valeur de la puissance optique prescrite pour la vision de loin augmentée de la valeur d'addition prescrite. Le verre est ensuite réalisé de façon à présenter sensiblement ces valeurs de puissance optique en deux points qui sont situés respectivement dans la zone de vision de loin et dans la zone de vision de près. Ces points sont appelés point de vision de loin et point de vision de près. Sur la figure 1a, ils sont notés VL et VP respectivement. La référence 1 désigne le verre et la lettre O désigne le centre du verre. Ce centre O est couramment utilisé en outre comme point de référence prismatique pour le verre. VL est situé sur une ligne verticale au dessus de O, et VP est décalé latéralement (parallèlement à l'axe X) par rapport à VL. Le sens du décalage de VP est inversé entre un verre droit et un verre gauche. Une ligne M, qui est appelée ligne méridienne principale, relie les points VL et VP. Elle correspond à la trace sur le verre de la direction de regard lorsque le porteur observe successivement des objets qui sont situés devant de lui à des hauteurs et à des distances variables.

La figure 1b fait apparaître les faces antérieure et postérieure du verre. Celles-ci sont respectivement de forme convexe et concave, et notées $S_{ANT}$ et $S_{POST}$. Le verre 1 peut être composé de tout matériau transparent qui est compatible avec l'application ophtalmique. En particulier, ce matériau peut être minéral, organique ou composite.

Les points O, VL et VP sont définis sur la face antérieure $S_{ANT}$ du verre 1, et servent de points de référence pour évaluer la sphère de cette face antérieure afin de déterminer l'addition $A_{ANT}$ de celle-ci. L'addition $A_{POST}$ de la face postérieure $S_{POST}$ du verre 1 est déterminée à partir de valeurs de sphère qui sont évaluées en deux points de référence de cette face postérieure qui correspondent aux points VL et VP. Ces deux points de référence de la face postérieure peuvent être situés respectivement en vis-à-vis des points VL et VP, ou bien être décalés par rapport à ceux-ci en suivant le trajet de rayons lumineux qui passent par les points VL et VP. Alternativement, les points de référence de la face postérieure peuvent être définis à partir des points VL et VP en utilisant diverses approximations de trajets lumineux.

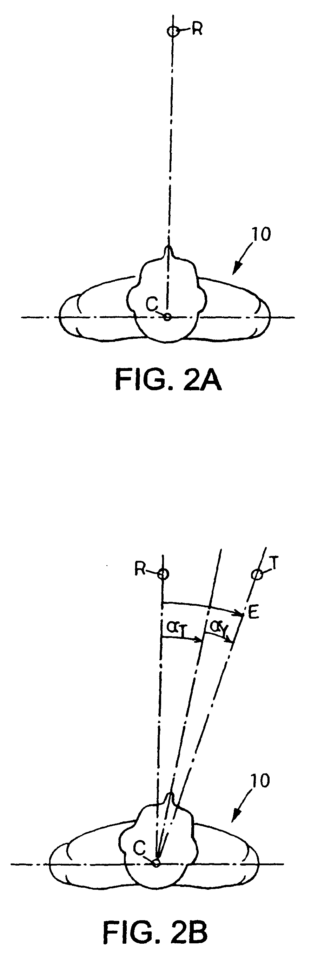

On caractérise ensuite les amplitudes relatives de mouvements d'yeux et de tête qui sont effectuées par le porteur auquel le verre est destiné. Pour cela, on peut demander au porteur de regarder droit devant lui une première cible, dite cible de référence, en se plaçant face à celle-ci. La cible de référence est notée R sur la figure 2a, et la référence 10 désigne le porteur. Elle peut être située à hauteur d'yeux pour le porteur, en particulier. Le porteur se place donc devant la cible de référence, avec les épaules sensiblement situées dans un plan vertical qui est perpendiculaire à la ligne virtuelle qui relie sa tête à la cible de référence. Il a alors la tête et les yeux qui sont orientés en direction de la cible de référence.

A partir de cette situation, on demande au porteur de regarder une seconde cible, dite cible de test et notée T, qui est décalée par rapport à la cible de référence, sans bouger les épaules. Pour ce faire, il tourne pour partie la tête et pour partie les yeux (figure 2b), de sorte que la direction de son regard passe de la cible de référence R à la cible de test T. De préférence, la cible de test est décalée horizontalement par rapport à la cible de référence, de façon à caractériser les mouvements horizontaux de tête et d'yeux du porteur.

Le décalage angulaire de la cible de test par rapport à celle de référence est appelé excentricité, et noté E. On prend le centre C de rotation de la tête comme pôle de mesure des angles dans un plan horizontal qui contient ce pôle et les deux cibles R et T. Sur la figure 2b, $\alpha_T$ désigne l'angle de rotation de la tête du porteur, aussi appelé déviation angulaire de la tête, pour passer de la première situation d'observation de la cible de référence à la seconde situation d'observation de la cible de test. $\alpha_Y$ est l'angle de la rotation des yeux qui est effectuée simultanément par le porteur. L'excentricité E est donc égale à la somme des deux angles $\alpha_T$ et $\alpha_Y$.

On calcule alors le quotient de la déviation angulaire de la tête $\alpha_T$ par l'excentricité E. Ce quotient est égal à l'unité pour un porteur qui a exclusivement tourné la tête pour passer de la cible de référence à la cible de test, et à zéro pour un porteur qui a tourné seulement les yeux.

On calcule ensuite un gain G pour ce test de coordination de mouvement "oeil/tête" qui a été effectué pour le porteur. Le gain G peut être défini par une fonction prédéterminée du quotient de la déviation angulaire de la tête $\alpha_T$ par l'excentricité E. Par exemple, le gain G peut être directement égal au quotient de $\alpha_T$ par E : $G = \alpha_T / E$. Un porteur qui tourne essentiellement les yeux pour fixer la cible de test («eye-mover») a donc une valeur du gain G proche de zéro, et un porteur qui tourne essentiellement la tête pour fixer la même cible («head-mover») a une valeur de G proche de l'unité.

Ce test de coordination de mouvement "oeil/tête" peut être effectué par le porteur dans la boutique d'un détaillant opticien chez qui il commande sa paire de lunettes équipée du verre correcteur. D'autres tests de coordination de mouvement "oeil/tête" qui sont équivalents à celui qui vient d'être décrit peuvent être effectués alternativement, sans que la mise en oeuvre de l'invention soit modifiée dans son principe.

L'invention est décrite dans la suite en adoptant la variation du grossissement apparent du verre comme caractéristique d'adaptation du verre au porteur, via la sélection des valeurs d'addition de la face antérieure et de la face postérieure du verre. Ce grossissement est produit par le verre lorsqu'il est adapté dans une monture de lunettes et placé sur le visage du porteur pour des conditions données d'utilisation. Il est égal au quotient de la taille de l'image rétinienne avec verre correcteur par la taille de l'image rétinienne sans verre. Ce grossissement, noté SM (pour Spectacle Magnification), peut être calculé en approximation paraxiale en appliquant la formule suivante :

$$SM = \frac{1}{1 - \left(D_1 \cdot \dfrac{e}{n}\right)} \cdot \frac{1}{1 - (d \cdot D)} \qquad (1)$$

Dans cette formule, $D_1$ désigne la courbure de la face antérieure du verre au point de traversée du rayon lumineux, D est la puissance optique du verre au même point, e désigne l'épaisseur du verre au centre O de celui-ci (voir figure 1 b), n est l'indice de réfraction du matériau qui compose le verre entre ses deux faces, et d est la distance entre la face postérieure du verre et la pupille d'entrée de l'oeil. L'Homme du métier comprendra que d'autres formules équivalentes à la formule 1 peuvent être utilisées alternativement.

Etant donné que les valeurs de $D_1$ et D varient le long de la surface d'un verre qui est progressif, le grossissement SM varie en conséquence. En particulier, il peut présenter deux valeurs qui sont distinctes au point de vision de loin VL et au point de vision de près VP. Ces deux valeurs sont notées dans la suite $SM_{VL}$ et $SM_{VP}$. Une différence entre ces deux valeurs est susceptible de provoquer au porteur une sensation de tangage désagréable, d'autant plus importante et incommodante que le porteur a tendance à regarder dans des directions différentes en tournant la tête plutôt que les yeux, c'est-à-dire lorsque la valeur qui est déterminée pour le gain G est supérieure à 0,5.

Il peut alors être avantageux de sélectionner les valeurs des additions respectives des faces antérieure et postérieure du verre en fonction de la valeur du gain G. Cette sélection peut être réalisée de façon à réduire la différence entre les valeurs du grossissement $SM_{VP}$ et $SM_{VL}$, d'autant plus que la valeur de G est élevée, proche de 1.

On rappelle que l'addition de la face antérieure $S_{ANT}$ du verre est donnée par :

$$A_{ANT} = \frac{n-1}{2} \cdot \left[ \left( \frac{1}{R1_{ANT}} + \frac{1}{R2_{ANT}} \right)_{VP} - \left( \frac{1}{R1_{ANT}} + \frac{1}{R2_{ANT}} \right)_{VL} \right] \quad (2)$$

Dans cette formule, $R1_{ANT}$ et $R2_{ANT}$ désignent respectivement les rayons de courbure minimal et maximal de la face antérieure selon deux directions perpendiculaires entre elles. Ils sont déterminés au point de vision de loin VL ou au point de vision de près VP selon l'indication qui figure en indice de chaque parenthèse à l'intérieur du crochet. n désigne encore l'indice de réfraction du matériau du verre.

De façon similaire, l'addition de la face postérieure $S_{POST}$ du verre est donnée par la formule suivante, en adoptant une signification analogue de chaque symbole :

$$A_{POST} = -\frac{n-1}{2} \cdot \left[ \left( \frac{1}{R1_{POST}} + \frac{1}{R2_{POST}} \right)_{VP} - \left( \frac{1}{R1_{POST}} + \frac{1}{R2_{POST}} \right)_{VL} \right] \quad (3)$$

En outre, de façon connue, l'addition finale du verre résulte d'une combinaison des additions respectives de la face antérieure et de la face postérieure. Pour cette raison, l'Homme du métier parle de répartir l'addition du verre A entre les deux faces du verre. A titre d'illustration, le tableau ci-dessous regroupe des caractéristiques de cinq verres progressifs, qui correspondent tous à une même prescription : sphère et cylindre nuls en vision de loin, et addition prescrite de 2 dioptries. Pour chacun des verres qui sont désignés dans la suite par les numéros correspondants, le tableau indique aussi les valeurs du grossissement SM aux points de vision de loin et de près.

Tableau 1

| N° | $A_{ANT}$ | $A_{POST}$ | $SM_{VL}$ | $SM_{VP}$ | G |
|---|---|---|---|---|---|
| 1 | +3 dioptries | -1 dioptrie | 1,005 | 1,045 | Porteur qui tourne plutôt les yeux (G≈0) |
| 2 | +2 dioptries | 0 | 1,005 | 1,043 | |
| 3 | +1 dioptrie | 1 dioptrie | 1,005 | 1,042 | Cas intermédiaire G≈0,5) |
| 4 | 0 | +2 dioptries | 1,005 | 1,041 | Porteur qui tourne plutôt la tête (G≈1) |
| 5 | -1 dioptrie | +3 dioptries | 1,005 | 1,040 | |

Les valeurs des différents paramètres qui interviennent dans la formule 1 sont pour ces cinq verres : e=1,9 mm ; n=1,665 ; d=15 mm. Dans la mise en oeuvre particulière de l'invention qui est décrite ici, la face antérieure $S_{ANT}$ est d'abord sélectionnée parmi une série de faces antérieures disponibles. Cette face antérieure possède la valeur d'addition $Aq_{NT}$. Puis la face postérieure $S_{POST}$ est calculée pour obtenir, lorsqu'elle est combinée avec la face antérieure sélectionnée, une valeur de l'addition réelle du verre qui est proche de la valeur A, et pour obtenir en même temps une valeur de puissance optique au point de vision de loin qui est proche de la valeur correspondante prescrite. Les valeurs du grossissement $SM_{VL}$ et $SM_{VP}$ sont calculées en utilisant la formule 1 aux points de vision de loin VL et de près VP, avec des valeurs de la courbure $D_1$ qui sont déterminées pour la face antérieure sélectionnée, et des valeurs de puissance optique D qui sont déterminées pour la combinaison de la face antérieure sélectionnée et pour la face postérieure calculée.

Ainsi, réduire l'addition de la face antérieure du verre (numéro croissant des verres dans la première colonne du tableau 1) permet de réduire l'écart du grossissement entre les points de vision de près et de loin du verre. En augmentant simultanément l'addition de la face postérieure, l'addition du verre est gardée sensiblement constante.

La dernière colonne du tableau 1 indique le type de porteur auquel est destiné préférablement chacun des cinq verres, en fonction de la valeur du gain G qui est obtenue au test de coordination de mouvement «oeil-tête».

A partir de la valeur du gain G qui a été déterminée pour un porteur identifié, plusieurs méthodes peuvent être utilisées pour sélectionner les valeurs d'addition $A_{ANT}$ et $A_{POST}$, respectivement de la face antérieure $S_{ANT}$ et de la face postérieure $S_{POST}$ du verre, tout en maintenant sensiblement constante l'addition du verre. Parmi celles-ci, on peut citer :

- utilisation d'une formule mathématique qui relie un paramètre de répartition de l'addition du verre entre les faces antérieure et postérieure d'une part, et le gain calculé d'autre part. Cette formule peut correspondre notamment à une fonction continue qui détermine le paramètre de répartition à partir du gain et, éventuellement, de la valeur d'addition prescrite du verre. Par exemple : $A_{ANT}/A = (k \cdot G + m)$, où k et m sont deux constantes fixées initialement. Les verres 2-4 du tableau 1 correspondent aux valeurs suivantes des constantes k et m : k=-1 et m=1, alors que les verres 1 et 5 correspondent à k=-2 et m=1,5 ; et

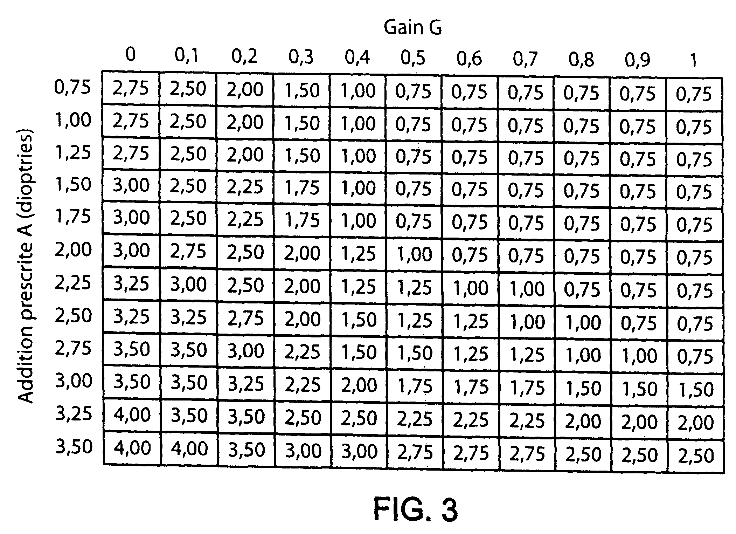

- utilisation d'une table de référence à deux entrées, qui indique des valeurs d'addition de l'une des deux faces du verre pour des couples de valeurs respectives de l'addition prescrite et du gain calculé formant les deux entrées de la table. La figure 3 est un exemple d'une telle table. Elle indique la valeur de l'addition $A_{ANT}$ de la face antérieure $S_{ANT}$, exprimée en dioptries, en fonction de l'addition prescrite A et de la valeur du gain G.

Lorsque la variation du grossissement doit être réduite entre des points différents du verre pour un porteur dont l'amplitude relative des mouvements de tête est grande, pour une valeur de puissance prescrite pour le verre en vision de loin et une valeur d'addition prescrite qui sont identiques, la valeur d'addition $A_{ANT}$ qui est sélectionnée pour la face antérieure du verre peut être inférieure à la valeur d'addition du verre A qui est prescrite pour le porteur. L'addition qui est sélectionnée simultanément pour la face postérieure est alors positive. La table de la figure 3 indique une telle sélection, au moins lorsque l'amplitude relative des mouvements de tête du porteur est supérieure ou égale à l'amplitude relative correspondante des mouvements d'yeux, c'est-à-dire lorsque G ≥ 0,5, et lorsque l'addition A du verre qui est prescrite pour le porteur est supérieure ou égale à 1 dioptrie. A l'inverse, pour un porteur qui tourne essentiellement les yeux, correspondant à un gain G qui est inférieur ou égal à 0,2 dans la table de la figure 3, l'addition $A_{ANT}$ de la face antérieure peut être supérieure à l'addition prescrite. L'Homme du métier parle alors de sur-addition de la face antérieure du verre et l'addition de la face postérieure est alors négative, pour compenser cette sur-addition. Le verre 1 du tableau 1 ci-dessus correspond à un tel cas de sur-addition de la face antérieure.
Le verre peut alors être fabriqué d'une façon usuelle, avec les faces antérieure et postérieure qui possèdent les additions sélectionnées et des courbures au point de vision de loin qui sont appropriées par rapport à la prescription. En particulier, un modèle de verre semi-fini peut être sélectionné, qui possède une face antérieure définitive correspondant à l'addition $A_{ANT}$ et qui est compatible avec la prescription. La face postérieure est ensuite usinée en reprise pour obtenir l'addition $A_{POST}$ et la prescription.

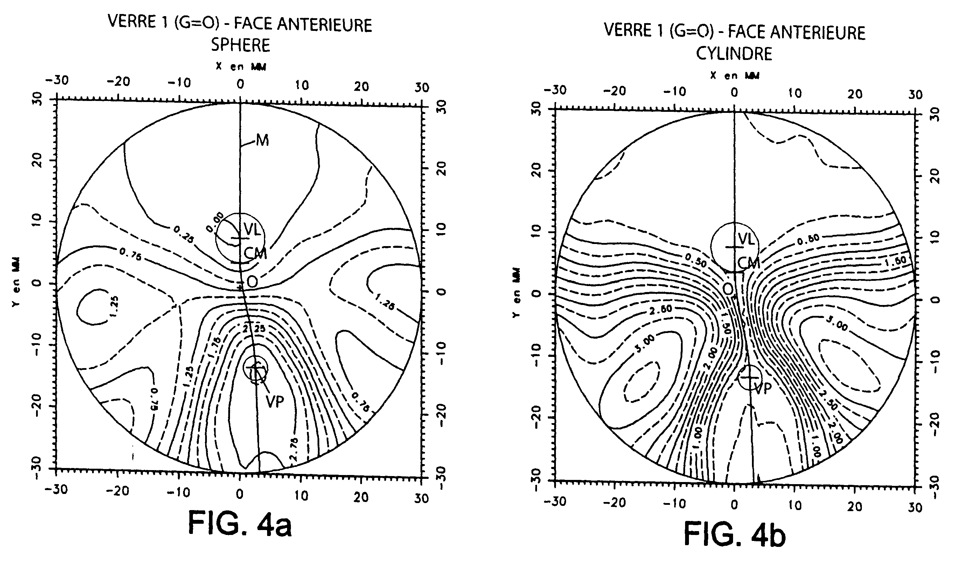

Les figures 4a et 4b sont des cartographies respectives des valeurs de sphère et de cylindre de la face antérieure $S_{ANT}$ du verre 1 qui est indiqué dans le tableau 1. Ces figures caractérisent ensemble le design de cette face. Elles sont limitées par le bord circulaire du verre, et chaque point de la face est repéré par deux coordonnées rectangulaires, respectivement notées X et Y, et exprimées en millimètres (mm). Les lignes indiquées sur la figure 4a sont des lignes isosphères, qui relient des points de la face du verre qui correspondent à une même valeur de sphère. Cette valeur est indiquée en dioptries pour certaines de ces lignes. De façon similaire, les lignes indiquées sur la figure 4b sont des lignes isocylindres, qui relient des points de la face du verre qui correspondent à une même valeur de cylindre. Pour mémoire, on rappelle que la sphère, qui est aussi appelée sphère moyenne, et le cylindre de la face antérieure du verre en un point de celle-ci sont donnés par les formules suivantes :

$$Sph_{ANT} = \frac{n-1}{2} \cdot \left( \frac{1}{R1_{ANT}} + \frac{1}{R2_{ANT}} \right) \qquad (4a)$$

$$Cyl_{ANT} = (n-1) \cdot \left| \frac{1}{R1_{ANT}} - \frac{1}{R2_{ANT}} \right| \qquad (4b)$$

Les points de vision de loin et de près, VL et VP, sont repérés sur les cartographies 4a et 4b. La différence des valeurs de sphère entre les points VP et VL correspond à l'addition de la face antérieure, qui est égale à 3,02 dioptries (figure 4a).
Un point supplémentaire, noté CM et appelé croix de montage du verre, est aussi indiqué en tant que repère sur ces cartographies. Le point CM est le point du verre qui doit être placé en face du centre de la pupille du porteur auquel est destiné le verre.

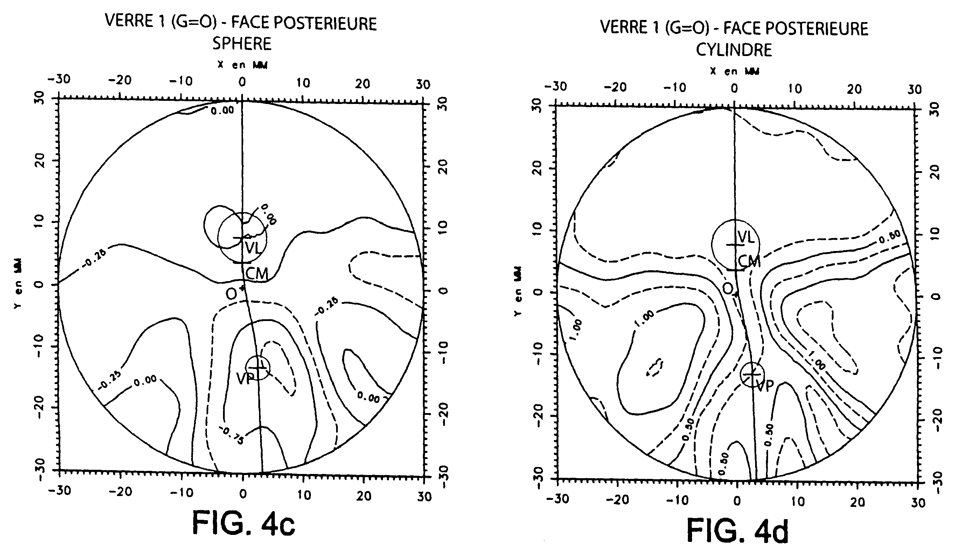

Les figures 4c et 4d sont des cartographies similaires pour la face postérieure $S_{POST}$ du verre 1, respectivement de sphère et de cylindre. L'addition de la face postérieure du verre 1 est égale à -0,98 dioptrie.

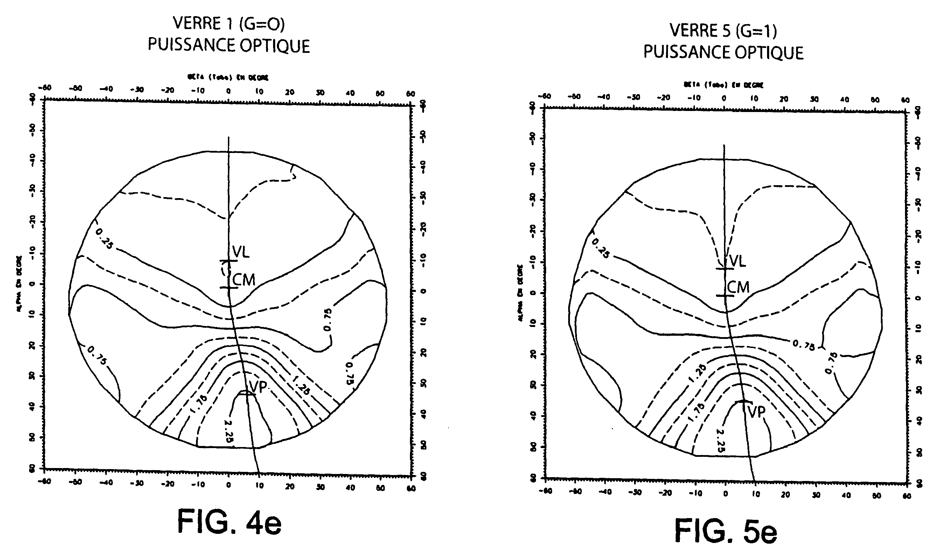

La figure 4e illustre les variations de la puissance optique du verre 1. Chaque direction d'observation à travers le verre est repérée par deux coordonnées angulaires exprimées en degrés : alpha repère la hauteur d'observation par rapport à un plan horizontal, et bêta repère la rotation de l'oeil dans ce plan horizontal. L'origine de ce système de coordonnées angulaires (alpha=0 ; bêta=0) correspond au point CM. Les directions qui correspondent respectivement aux points VL et VP sont aussi indiquées sur cette cartographie. Les lignes indiquées sur la figure 4e sont des lignes d'isopuissance, qui relient des directions d'observation au travers du verre qui correspondent à une même valeur de puissance optique. Cette valeur est indiquée en dioptries pour certaines de ces lignes. Pour l'exemple considéré, la puissance de la correction visuelle est sensiblement nulle au point de vision de loin VL, et égale à 2,28 dioptries au point de vision de près VP. Le verre 1 présente donc effectivement une addition proche de la valeur prescrite de 2,0 dioptries.

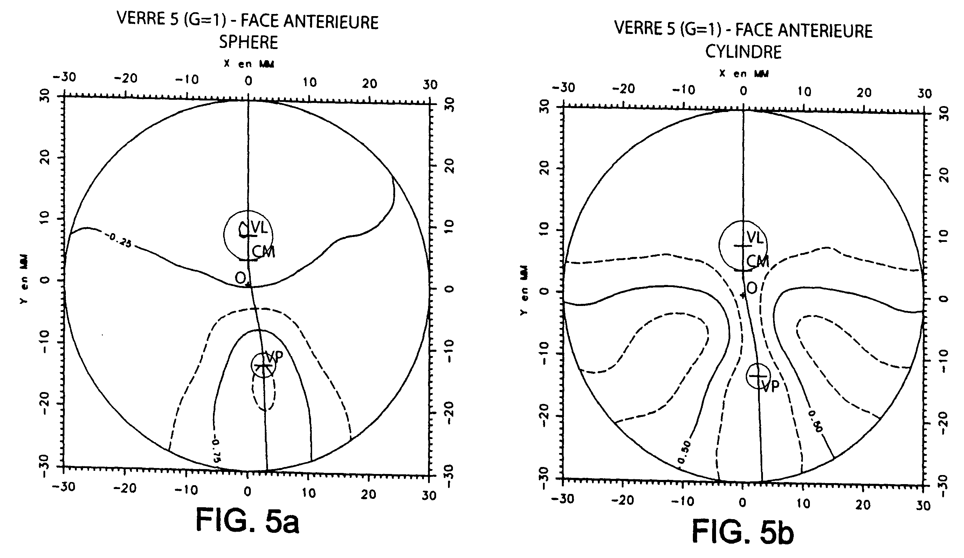

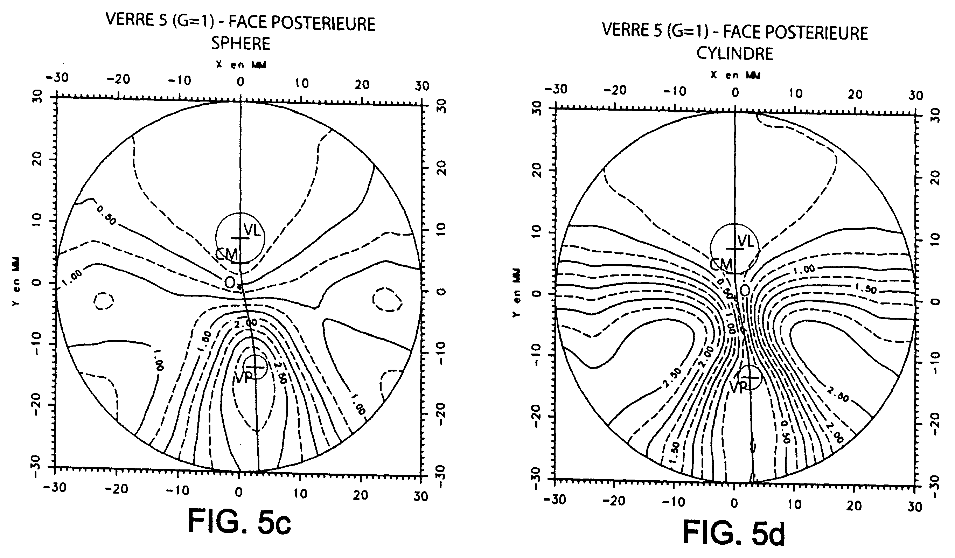

Les figures 5a à 5e caractérisent de façon similaire le verre 5 du tableau 1. Une comparaison des figures 4e et 5e montrent que ces verres ont des fonctions optiques qui sont sensiblement identiques, alors qu'ils présentent des valeurs de grossissement SM au point de vision de près VP qui sont différentes (voir tableau 1).

On décrit maintenant un perfectionnement de l'invention, selon lequel le design du verre est adapté en fonction de la valeur du gain G qui a été calculée pour le porteur, tout en n'utilisant qu'un seul design de verre semi-fini pour chaque valeur de l'addition de la face antérieure.

Selon ce perfectionnement, la fabrication du verre final à partir d'un verre semi-fini comprend les étapes préalables suivantes :

- sélectionner un verre semi-fini avec une face antérieure possédant la valeur d'addition qui est sélectionnée pour cette face antérieure comme décrit précédemment, et possédant un design de série et ;

- obtenir deux faces antérieures de référence, qui correspondent respectivement à deux valeurs de gain de référence pour le test de coordination de mouvement «oeil/tête», et qui possèdent chacune la valeur d'addition prescrite pour le porteur ;

- calculer une face antérieure d'un verre fictif de cible en mélangeant les deux faces antérieures de référence, avec des proportions de mélange qui dépendent du gain calculé pour le porteur par rapport aux deux valeurs de gain de référence ;

- définir un verre fictif de cible en associant la face antérieure de mélange avec une face postérieure fictive, cette dernière ayant des valeurs uniformes de sphère et de cylindre sélectionnées de sorte que le verre fictif de cible possède une puissance optique au point de vision de loin qui est sensiblement égale à la valeur prescrite pour le porteur ; et

- par calcul, optimiser un verre fictif d'essai qui a, d'une façon fixe, la face antérieure du verre semi-fini, et qui a une face postérieure variable, de sorte que ce verre fictif d'essai ait des caractéristiques optiques sensiblement égales aux caractéristiques du verre fictif de cible.

De façon préférée, la face antérieure du verre semi-fini sélectionné initialement présente un design moyen, qui est intermédiaire entre un design à zones de vision larges et un design à zones de vision étroites. De cette façon, elle présente des gradients de sphère et de cylindre qui sont modérés.

La face postérieure du verre semi-fini qui a été sélectionné initialement est alors réalisée, par exemple par usinage, conformément à la face postérieure du verre fictif d'essai optimisé. Il est entendu que, en fonction du programme d'optimisation qui est utilisé et du cas particulier de chaque verre réalisé, le verre fictif d'essai optimisé peut avoir des caractéristiques qui ne sont pas strictement égales à celles du verre fictif de cible. L'homme du métier comprendra la signification de l'expression "caractéristiques optiques sensiblement égales" en ce sens que l'écart entre le verre fictif d'essai et le verre fictif de cible est réduit par l'étape d'optimisation.

Ce perfectionnement permet d'adapter au porteur, en fonction de sa propension à tourner plutôt la tête ou les yeux, non seulement la répartition de l'addition entre les deux faces du verre, mais aussi le design du verre. L'adaptation du design est obtenue via la face postérieure du verre uniquement, ce qui permet de n'utiliser qu'un seul modèle de verre semi-fini pour tous les designs de verre qui sont finalement obtenus. Ainsi, la gamme de verres semi-finis qui est nécessaire pour réaliser des verres ophtalmiques destinés à des porteurs quelconques en utilisant l'invention n'a pas besoin de contenir de modèles qui sont différenciés seulement par le design de face antérieure. La gestion des stocks de verres semi-finis est alors simplifiée. En outre, chaque modèle de verre semi-fini peut être fabriqué en plus grande série, ce qui réduit son prix de revient à l'unité.

D'une façon qui est préférée mais qui n'est pas indispensable à la mise en oeuvre du perfectionnement, les valeurs de gain de référence qui sont utilisées peuvent correspondre respectivement à un premier porteur qui tournerait uniquement les yeux lors d'un changement de direction de regard, et à un second porteur qui tournerait uniquement la tête lors du même changement de direction de regard. Elles correspondent donc à deux comportements extrêmes du porteur, de sorte que la face antérieure du verre fictif de cible est alors intermédiaire entre les deux faces antérieures de référence.

De façon connue, le mélange des deux faces antérieures de référence pour obtenir la face antérieure du verre fictif de cible peut être effectué en caractérisant chaque face de référence par ses valeurs sagittales («sag value» en anglais) aux points d'un maillage commun défini sur celles-ci. Les valeurs sagittales des deux faces de référence sont alors ajoutées entre elles, pour chaque point du maillage, en les pondérant par des coefficients qui sont déterminés de façon appropriée. Dans la mesure où le gain est égal au quotient de la déviation de la tête du porteur par l'excentricité de la cible de test, les valeurs du gain qui servent de référence sont zéro et l'unité. Le mélange des faces de référence peut alors être effectué en appliquant la combinaison linéaire suivante aux hauteurs sagittales, pour chaque point du maillage :

$$S_{ANT}(porteur) = (1-G) \times S_{ANT}(G=0) + G \times S_{ANT}(G=1) \qquad (5)$$

où $S_{ANT}(porteur)$ désigne la face antérieure du verre fictif de cible calculée pour le porteur, G est la valeur du gain qui est calculée pour ce dernier, et $S_{ANT}(G=0)$ et $S_{ANT}(G=1)$ désignent les faces antérieures de référence, qui ont chacune une addition égale à celle qui est prescrite pour le porteur auquel le verre est destiné, mais qui sont adaptées respectivement à des porteurs fictifs qui ne tourneraient chacun que les yeux ou que la tête. Ainsi, les deux faces antérieures de référence sont mélangées chacune avec un coefficient de combinaison linéaire qui est proportionnel à l'écart entre la valeur de gain de référence correspondante et la valeur du gain calculée pour le porteur. Il est entendu que d'autres règles de mélange de surface qui sont équivalentes à la formule 6 peuvent être utilisées alternativement, notamment en fonction de l'échelle de gain qui est adoptée pour le test de coordination de mouvement «oeil/tête».

La somme des deux coefficients de combinaison linéaire qui sont affectés respectivement aux deux faces antérieures de référence, pour un même point du maillage, est de préférence égale à l'unité. Ces coefficients peuvent éventuellement aussi varier entre des points différents du maillage, pour modifier une prépondérance de l'une des deux faces de référence dans le mélange, à l'intérieur de certaines zones de la face antérieure du verre.

Eventuellement, l'optimisation du verre fictif d'essai par rapport au verre fictif de cible peut être effectuée en attribuant initialement au verre fictif d'essai une face postérieure qui est corrigée d'un écart entre la face antérieure du verre semi-fini et la face antérieure du verre fictif de cible. Cette correction est appliquée par rapport à une face postérieure fictive initiale qui est sphérique ou torique, c'est-à-dire qui ne présente pas d'addition par elle-même. Une telle correction rend plus rapide l'optimisation du verre qui est effectuée par calcul. D'une façon usuelle pour l'Homme du métier, une soustraction de surfaces désigne une opération de combinaison de deux surfaces initiales pour en obtenir une troisième, par laquelle une valeur sagittale de la seconde surface est soustraite de celle de la première surface, en chaque point du maillage commun, et la troisième surface est définie en attribuant le résultat de la soustraction comme nouvelle hauteur sagittale au même point. En particulier, lorsque l'optimisation est effectuée de façon itérative en utilisant une fonction de mérite pour mesurer un écart entre le verre fictif d'essai qui est obtenu à chaque itération et le verre fictif de cible, l'optimisation requiert un nombre inférieur d'itérations pour atteindre une même valeur de la fonction de mérite.

Par ailleurs, le verre fictif de cible peut aussi être défini avec une valeur de base de la face antérieure différente de celle qui serait sélectionnée pour le verre semi-fini en fonction de la correction de vue prescrite, notamment en fonction de la valeur de puissance optique qui est prescrite pour le porteur et pour la vision de loin. De cette façon, des aberrations optiques du verre ophtalmique final peuvent être minimisées.

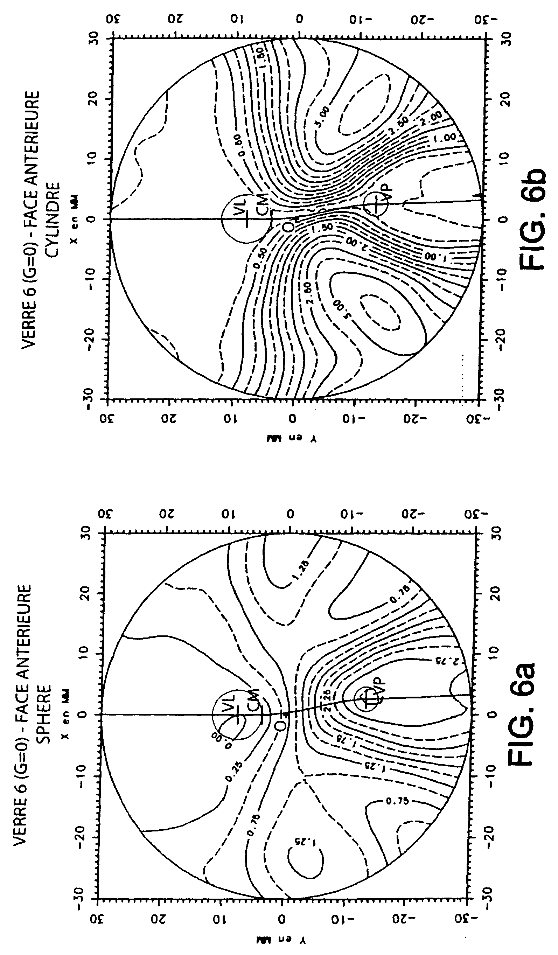

Les figures 6a, 6b, 7a, 7b et 8a, 8b concernent un sixième verre, noté verre 6, qui a été réalisé selon le perfectionnement qui vient d'être décrit. Ce verre 6 correspond encore à une addition prescrite de 2,0 dioptries et une puissance optique nulle au point de vision de loin. Il est destiné à un porteur de gain nul, comme le verre 1 du tableau 1.

Les figures 6a et 6b sont des caractérisations de la face antérieure du verre semi-fini de série qui a été utilisé pour réaliser le verre 6. Ce verre semi-fini possède une addition de face antérieure qui est égale à 3 dioptries, conformément à la mise en oeuvre de l'invention.

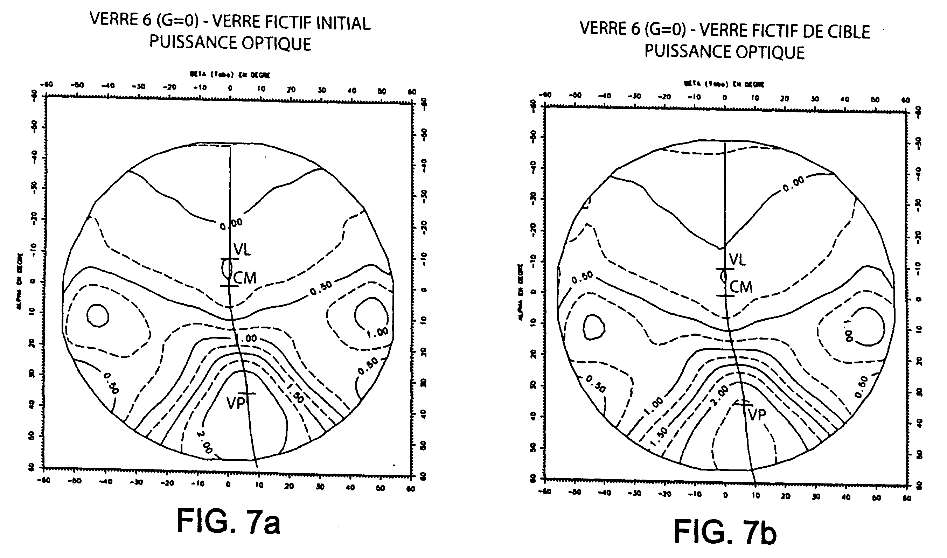

Les figures 7a et 7b sont des caractérisations respectives de puissance optique du verre fictif d'essai initial et du verre fictif de cible, tels que ceux-ci ont été utilisés lors de la réalisation du verre 6. L'addition de ces différents verres fictifs est sensiblement égale à 2 dioptries, conformément à la prescription du porteur. Dans la mise en oeuvre du perfectionnement qui a été faite par les inventeurs, des valeurs d'astigmatisme sont utilisées pour le verre fictif d'essai et le verre fictif de cible en même temps que les valeurs de puissance optique, notamment pour l'étape d'optimisation.

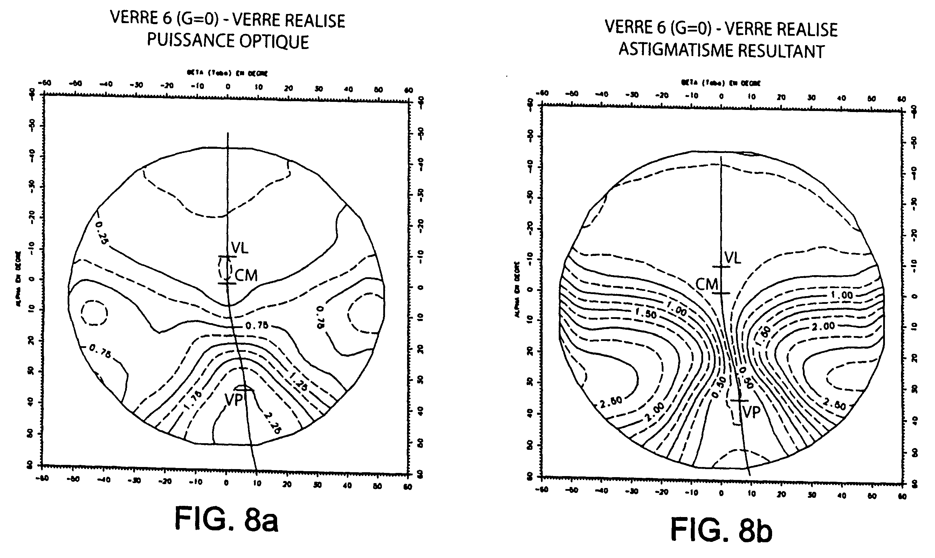

Enfin, les figures 8a et 8b sont des caractérisations de puissance optique et d'astigmatisme résultant qui ont été effectuées pour le verre 6 finalement obtenu.

Les lignes indiquées sur la figure 8b sont des lignes d'isoastigmatisme, qui relient des directions d'observation au travers du verre correspondant à une même valeur d'astigmatisme. Il est précisé que les valeurs d'astigmatisme qui sont marquées sur cette figure correspondent aux valeurs réelles auxquelles a été soustraite une éventuelle valeur d'astigmatisme prescrite pour porteur. Pour cette raison, les valeurs marquées sont appelées valeurs d'astigmatisme résultant, et sont presque nulles pour les directions d'observation qui correspondent aux points VL et VP.

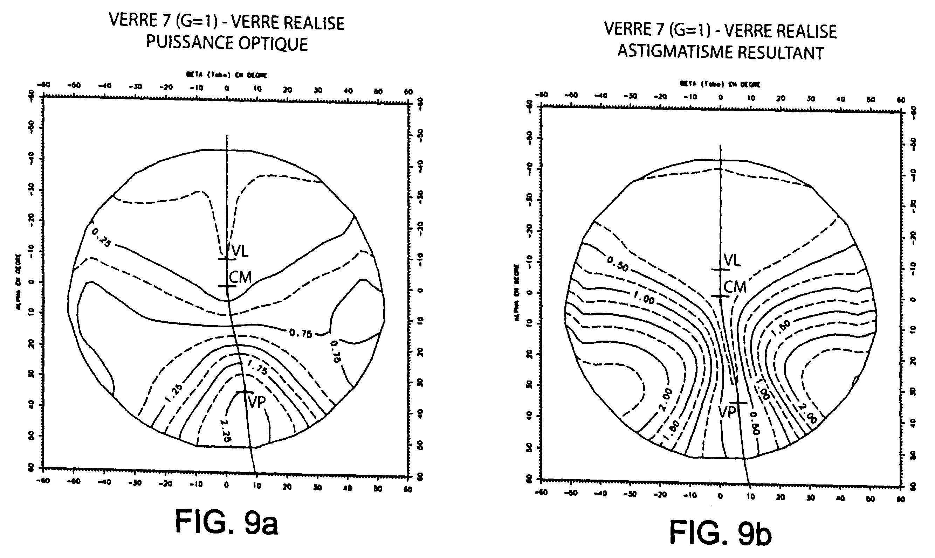

A titre de comparaison, les figures 9a et 9b sont des caractérisations de puissance optique et d'astigmatisme résiduel qui ont été réalisées pour un septième verre, noté verre 7. Le verre 7 a été aussi réalisé selon le perfectionnement de l'invention mais en étant destiné à un porteur de gain égal à l'unité. Il correspond donc à une prescription qui est identique à celle du verre 5 du tableau 1, avec les mêmes additions respectives des faces antérieure et postérieure. Mais il résulte d'une optimisation supplémentaire du design, réalisée pour un porteur qui tourne uniquement la tête.

Les comparaisons des figures 8a et 9a d'une part, et 8b et 9b d'autre part, font apparaître que les champs de vision de loin et de près du verre 6 sont plus larges que ceux du verre 7. Parallèlement, les gradients de puissance optique et d'astigmatisme du verre 7 sont plus faibles que ceux du verre 6, pour des directions de regard identiques.

La réalisation, selon le perfectionnement d'optimisation du design, d'un huitième verre correspondant aux données du verre 3 du tableau 1, a abouti à un design qui est intermédiaire à ceux des verres 6 et 7.

Il est entendu que le perfectionnement de l'invention qui vient d'être décrit pour réduire la gamme de modèles de verres semi-finis n'est pas indispensable à la mise en oeuvre de l'invention. En outre, l'Homme du métier comprendra que l'invention peut aussi être mise en oeuvre selon des modes de réalisation différents bien qu'équivalents. Par exemple, une modulation d'un indice de réfraction du verre peut être substituée à l'usinage d'une face en appliquant des relations connues de correspondance entre la courbure de la face et l'indice de réfraction.

## Revendications

1. Procédé de réalisation d'un verre ophtalmique (1) pour une paire de lunettes destinée à un porteur identifié, ledit verre ayant une face antérieure ($S_{ANT}$) et une face postérieure ($S_{POST}$) pouvant chacune présenter une addition, ledit procédé comprenant les étapes suivantes :

   /1/ obtenir une valeur d'addition de puissance optique pour le verre, entre un point de vision de loin (VL) et un point de vision de près (VP) dudit verre, prescrite pour le porteur ; et
   /2/ caractériser des amplitudes relatives de mouvements respectifs d'yeux et de tête du porteur effectués lors d'un changement de direction de regard dudit porteur ;

   et étant tel qu'il comprend en outre les étapes suivantes :

   /3/ déterminer une caractéristique qui varie en fonction d'une répartition de l'addition dudit verre entre les faces antérieure ($S_{ANT}$) et postérieure ($S_{POST}$), et qui est ressentie différemment par le porteur selon que ledit porteur tourne plutôt la tête ou les yeux lors d'un changement de la direction de regard ;
   /4/ en fonction des amplitudes relatives des mouvements respectifs d'yeux et de tête du porteur caractérisées à l'étape /2/, sélectionner des valeurs d'addition destinées respectivement à la face antérieure ($S_{ANT}$) et à la face postérieure ($S_{POST}$) du verre, lesquelles valeurs d'addition des dites faces sont adaptées de sorte que le verre présente sensiblement la valeur d'addition prescrite, et de sorte que la caractéristique déterminée à l'étape /3/ soit adaptée au porteur ; et
   /5/ fabriquer le verre avec les faces antérieure ($S_{ANT}$) et postérieure ($S_{POST}$) qui possèdent les valeurs d'addition sélectionnées à l'étape /4/ pour chacune des dites faces,

   ledit procédé étant **caractérisé en ce que** la caractéristique déterminée à l'étape /3/ est une variation d'un grossissement pour des directions différentes de regard du porteur à travers ledit verre.

2. Procédé selon la revendication 1, suivant lequel les valeurs d'addition qui sont sélectionnées pour la face antérieure ($S_{ANT}$) et la face postérieure ($S_{POST}$) du verre à l'étape /4/ sont adaptées pour réduire ladite variation du grossissement lorsque l'amplitude relative des mouvements de tête du porteur caractérisée à l'étape /2/ est plus grande, par rapport à une valeur de ladite variation de grossissement qui serait obtenue pour une amplitude relative plus faible des mouvements de tête, pour une puissance optique du verre au point de vision de loin et une valeur d'addition prescrite identiques.

3. Procédé selon la revendication 1 ou 2, suivant lequel la caractéristique déterminée à l'étape /3/ est une variation du grossissement pour des directions de regard du porteur traversant ledit verre respectivement au point de vision de loin (VL) et au point de vision de près (VP).

4. Procédé selon la revendication 3, suivant lequel la valeur d'addition qui est sélectionnée pour la face antérieure ($S_{ANT}$) du verre à l'étape /4/ est plus petite lorsque l'amplitude relative des mouvements de tête du porteur caractérisée à l'étape /2/ est plus grande, par rapport à une valeur d'addition de la face antérieure qui serait sélectionnée pour une amplitude relative plus faible des mouvements de tête, pour une puissance optique du verre au point de vision de loin et une valeur d'addition prescrite identiques.

5. Procédé selon l'une quelconque des revendications 2 à 4, suivant lequel la valeur d'addition qui est sélectionnée pour la face antérieure ($S_{ANT}$) du verre est inférieure à la valeur d'addition du verre présente pour le porteur, au moins lorsque l'amplitude relative des mouvements de tête du porteur qui est caractérisée à l'étape /2/ est supérieure ou égale à l'amplitude relative correspondante des mouvements d'yeux et lorsque l'addition du verre prescrite pour le porteur est supérieure ou égale à 1 dioptrie.

6. Procédé selon l'une quelconque des revendications précédentes, suivant lequel l'étape /2/ comprend un calcul de gain pour un test de coordination de mouvement "oeil/tête" réalisé pour le porteur, ledit gain étant une fonction d'une déviation angulaire de la tête du porteur ($\alpha_T$) divisée par une excentricité angulaire (E) d'une cible regardée par ledit porteur, et suivant lequel le gain calculé est utilisé à l'étape /4/ pour sélectionner les valeurs d'addition destinées respectivement à la face antérieure ($S_{ANT}$) et à la face postérieure ($S_{POST}$) du verre.

7. Procédé selon la revendication 6, suivant lequel le gain est égal à la déviation angulaire de la tête du porteur ($\alpha_T$) divisée par l'excentricité angulaire (E) de la cible regardée par ledit porteur.

8. Procédé selon la revendication 6 ou 7, suivant lequel l'étape /4/ est exécutée en utilisant une formule mathématique reliant un paramètre de répartition de l'addition du verre entre les faces antérieure ($S_{ANT}$) et postérieure ($S_{POST}$) d'une part, et le gain calculé d'autre part.

9. Procédé selon la revendication 8, suivant lequel la formule mathématique correspond à une fonction continue déterminant le paramètre de répartition de l'addition du verre entre les faces antérieure ($S_{ANT}$) et postérieure ($S_{POST}$) à partir du gain calculé et, éventuellement, de la valeur d'addition prescrite du verre.

10. Procédé selon la revendication 6 ou 7, suivant lequel l'étape /4/ est exécutée en utilisant une table de référence à deux entrées, ladite table indiquant des valeurs d'addition de l'une des faces antérieure ($S_{ANT}$) ou postérieure ($S_{POST}$) du verre pour des couples de valeurs respectives de l'addition du verre prescrite pour le porteur et du gain calculé formant les deux entrées de la table.

11. Procédé selon l'une quelconque des revendications 6 à 10, suivant lequel l'étape /5/ comprend elle-même les sous-étapes suivantes :

/5-1/ sélectionner un verre semi-fini ayant une face antérieure ($S_{ANT}$) possédant la valeur d'addition sélectionnée à l'étape /4/ pour ladite face antérieure, et possédant un design de série ;
/5-2/ obtenir deux faces antérieures de référence correspondant respectivement à deux valeurs de gain de référence pour le test de coordination de mouvement «oeil/tête», et possédant chacune la valeur d'addition prescrite pour le porteur ;
/5-3/ calculer une face antérieure d'un verre fictif de cible en mélangeant lesdites deux faces antérieures de référence, des proportions dudit mélange dépendant du gain calculé pour le porteur par rapport aux deux valeurs de gain de référence ;
/5-4/ définir un verre fictif de cible en associant la face antérieure de mélange avec une face postérieure fictive possédant des valeurs uniformes de sphère et de cylindre, lesdites valeurs de sphère et de cylindre étant sélectionnées de sorte que ledit verre fictif de cible possède une puissance optique au point de vision de loin qui est sensiblement égale à une valeur prescrite pour le porteur ;
/5-5/ par calcul, optimiser un verre fictif d'essai ayant, d'une façon fixe, la face antérieure du verre semi-fini ($S_{ANT}$) sélectionné à la sous-étape /5-1/, et ayant une face postérieure variable, de sorte que ledit verre fictif d'essai ait des caractéristiques optiques sensiblement égales aux caractéristiques du verre fictif de cible ; et
/5-6/ réaliser la face postérieure ($S_{POST}$) du verre semi-fini sélectionné conformément à la face postérieure du verre fictif d'essai optimisé.

**12.** Procédé selon la revendication 11, suivant lequel les valeurs de gain de référence utilisées à la sous-étape /5-2/ correspondent respectivement à un premier porteur qui tournerait uniquement les yeux lors d'un changement de direction de regard, et à un second porteur qui tournerait uniquement la tête lors du même changement de direction de regard.

**13.** Procédé selon la revendication 11 ou 12, selon lequel les deux faces antérieures de référence sont mélangées à la sous-étape /5-3/ chacune avec un coefficient de combinaison linéaire proportionnel à un écart entre la valeur de gain de référence correspondante et la valeur du gain calculée pour le porteur.

**14.** Procédé selon l'une quelconque des revendications 11 à 13, suivant lequel l'optimisation de la sous-étape /5-5/ est effectuée en attribuant initialement au verre fictif d'essai une face postérieure corrigée d'un écart entre la face antérieure du verre semi-fini ($S_{ANT}$) et la face antérieure du verre fictif de cible.

**15.** Procédé selon l'une quelconque des revendications 11 à 14, suivant lequel le verre fictif de cible est défini à la sous-étape /5-4/ avec une valeur de base de face antérieure ($S_{ANT}$) différente d'une valeur de base sélectionnée pour le verre semi-fini en fonction d'une valeur de puissance optique prescrite pour le porteur pour la vision de loin, de façon à minimiser des aberrations optiques du verre ophtalmique réalisé.

**16.** Procédé selon l'une quelconque des revendications précédentes, suivant lequel le verre est adapté pour corriger une presbytie du porteur.

**Patentansprüche**

**1.** Verfahren zur Herstellung eines Brillenglases (1) für eine Brille, die für einen identifizierten Träger bestimmt ist, wobei das Glas eine Vorderseite ($S_{ANT}$) und eine Rückseite ($S_{POST}$) aufweist, die jeweils eine Addition aufweisen können, wobei das Verfahren die folgenden Schritte aufweist:

/1/ Erhalten eines Additionswerts einer optischen Leistung für das Glas zwischen einem Weitsichtpunkt (VL) und einem Nahsichtpunkt (VP) des Glases, der für den Träger verschrieben ist; und
/2/ Kennzeichnen der relativen Amplituden von jeweiligen Augen- und Kopfbewegungen des Trägers, die bei einem Wechsel der Blickrichtung des Trägers durchgeführt werden;

und derart ist, dass es ferner die folgenden Schritte aufweist:

/3/ Bestimmen einer Eigenschaft, die in Abhängigkeit von einer Verteilung der Addition des Glases zwischen der Vorderseite ($S_{ANT}$) und der Rückseite ($S_{POST}$) variiert und die von dem Träger unterschiedlich wahrgenommen wird, je nachdem, ob der Träger eher den Kopf oder die Augen während eines Wechsels der Blickrichtung dreht;
/4/ in Abhängigkeit von den relativen Amplituden der jeweiligen Augen- und Kopfbewegungen des Trägers, die in dem Schritt /2/ gekennzeichnet werden, Auswählen der Additionswerte, die jeweils für die Vorderseite ($S_{ANT}$) und für die Rückseite ($S_{POST}$) des Glases bestimmt sind, wobei die Additionswerte der Seiten derart angepasst werden, dass das Glas im Wesentlichen den verschriebenen Additionswert aufweist, und dass die Eigenschaft, die in dem Schritt /3/ bestimmt wird, an den Träger angepasst ist; und
/5/ Herstellen des Glases mit der Vorderseite ($S_{ANT}$) und der Rückseite ($S_{POST}$), die die Additionswerte aufweisen, die in dem Schritt /4/ für jede der Seiten ausgewählt werden,

wobei das Verfahren **dadurch gekennzeichnet ist, dass** die Eigenschaft, die in dem Schritt /3/ bestimmt wird, eine Variation einer Vergrößerung für verschiedene Blickrichtungen des Trägers durch das Glas ist.

**2.** Verfahren nach Anspruch 1, wobei die Additionswerte, die für die Vorderseite ($S_{ANT}$) und die Rückseite ($S_{POST}$) des Glases in dem Schritt /4/ ausgewählt werden, geeignet sind, um die Variation der Vergrößerung zu reduzieren, wenn die relative Amplitude der Kopfbewegungen des Trägers, die in dem Schritt /2/ gekennzeichnet wird, gegenüber einem Wert der Variation der Vergrößerung größer ist, der für eine niedrigere relative Amplitude der Kopfbewegungen für eine identische optische Leistung des Glases am Weitsichtpunkt und einen identischen verschriebenen Additionswert erhalten werden würde.

**3.** Verfahren nach Anspruch 1 oder 2, wobei die Eigenschaft, die in dem Schritt /3/ bestimmt wird, eine Variation der Vergrößerung für Blickrichtungen des Trägers ist, die durch das Glas jeweils am Weitsichtpunkt (VL) und am Nahsichtpunkt (VP) hindurchgehen.

4. Verfahren nach Anspruch 3, wobei der Additionswert, der für die Vorderseite ($S_{ANT}$) des Glases in dem Schritt /4/ ausgewählt wird, kleiner ist, wenn die relative Amplitude der Kopfbewegungen des Trägers, die in dem Schritt /2/ gekennzeichnet wird, gegenüber einem Additionswert der Vorderseite größer ist, der für eine niedrigere relative Amplitude der Kopfbewegungen für eine identische optische Leistung des Glases am Weitsichtpunkt und einen identischen verschriebenen Additionswert erhalten werden würde.

5. Verfahren nach einem der Ansprüche 2 bis 4, wobei der Additionswert, der für die Vorderseite ($S_{ANT}$) des Glases ausgewählt wird, niedriger als der Additionswert des Glases ist, der für den Träger verschrieben wird, mindestens wenn die relative Amplitude der Kopfbewegungen des Trägers, die in dem Schritt /2/ / gekennzeichnet wird, größer als oder gleich der entsprechenden relativen Amplitude der Augenbewegungen ist, und wenn die Addition des Glases, die für den Träger verschrieben wird, größer als oder gleich 1 Dioptrie ist.

6. Verfahren nach einem der vorhergehenden Ansprüche, wobei der Schritt /2/ / eine Verstärkungsberechnung für einen Test der Augen-KopfBewegungskoordination aufweist, der für den Träger durchgeführt wird, wobei die Verstärkung eine Funktion einer Winkelabweichung des Kopfes des Trägers ($\alpha_T$), dividiert durch eine Winkelexzentrizität (E) eines Ziels ist, das von dem Träger betrachtet wird, und wobei die berechnete Verstärkung in dem Schritt /4/ verwendet wird, um die Additionswerte auszuwählen, die jeweils für die Vorderseite ($S_{ANT}$) und für die Rückseite ($S_{POST}$) des Glases bestimmt sind.

7. Verfahren nach Anspruch 6, wobei die Verstärkung gleich der Winkelabweichung des Kopfes des Trägers ($\alpha_T$), dividiert durch die Winkelexzentrizität (E) des Ziels, das von dem Träger betrachtet wird, ist.

8. Verfahren nach Anspruch 6 oder 7, wobei der Schritt /4/ durchgeführt wird, indem eine mathematische Formel verwendet wird, die einen Verteilungsparameter der Addition des Glases zwischen der Vorderseite ($S_{ANT}$) und der Rückseite ($S_{POST}$) einerseits und die berechnete Verstärkung andererseits verbindet.

9. Verfahren nach Anspruch 8, wobei die mathematische Formel einer stetigen Funktion entspricht, die den Verteilungsparameter der Addition des Glases zwischen der Vorderseite ($S_{ANT}$) und der Rückseite ($S_{POST}$) ausgehend von der berechneten Verstärkung und eventuell von dem verschriebenen Additionswert des Glases bestimmt.

10. Verfahren nach Anspruch 6 oder 7, wobei der Schritt /4/ durchgeführt wird, indem eine Referenztabelle mit zwei Einträgen verwendet wird, wobei die Tabelle Additionswerte von einer der Vorderseite ($S_{ANT}$) oder der Rückseite ($S_{POST}$) des Glases für jeweilige Wertepaare der Addition des Glases, die für den Träger verschrieben wird, und der berechneten Verstärkung angibt, die die zwei Einträge der Tabelle bilden.

11. Verfahren nach einem der Ansprüche 6 bis 10, wobei der Schritt /5/ selbst die folgenden Unterschritte aufweist:

/5-1/ Auswählen eines halbfertigen Glases, das eine Vorderseite ($S_{ANT}$) aufweist, die den Additionswert aufweist, der in dem Schritt /4/ für die Vorderseite ausgewählt wird, und ein Seriendesign aufweist;
/5-2/ Erhalten von zwei Referenzvorderseiten, die jeweils zwei Referenzwerten der Verstärkung für den Test der Augen-Kopf-Bewegungskoordination entsprechen und jeweils den Additionswert aufweisen, der für den Träger verschrieben wird;
/5-3/ Berechnen einer Vorderseite eines fiktiven Zielglases, indem die zwei Referenzvorderseiten vermischt werden, wobei Proportionen der Mischung von der Verstärkung, die für den Träger berechnet wird, gegenüber von den zwei Referenzwerten der Verstärkung abhängen;
/5-4/ Definieren eines fiktiven Zielglases, indem die Vorderseite der Mischung mit einer fiktiven Rückseite verbunden wird, die einheitliche Sphären- und Zylinderwerte aufweist, wobei die Sphären- und Zylinderwerte derart ausgewählt werden, dass das fiktive Zielglas eine optische Leistung am Weitsichtpunkt aufweist, die im Wesentlichen gleich einem Wert ist, der für den Träger verschrieben wird;
/5-5/ durch Berechnen Optimieren eines fiktiven Testglases, das auf eine feste Weise die Vorderseite des halbfertigen Glases ($S_{ANT}$) aufweist, das in dem Unterschritt /5-1/ ausgewählt wird, und das eine variable Rückseite derart aufweist, dass das fiktive Testglas optische Eigenschaften aufweist, die im Wesentlichen gleich den Eigenschaften des fiktiven Zielglases sind; und
/5-6/ Erstellen der Rückseite ($S_{POST}$) des halbfertigen Glases, das entsprechend der Rückseite des optimierten fiktiven Testglases ausgewählt wird.

**12.** Verfahren nach Anspruch 11, wobei die Referenzwerte der Verstärkung, die in dem Unterschritt /5-2/ verwendet werden, jeweils einem ersten Träger, der nur die Augen bei einem Wechsel der Blickrichtung drehen würde, und einem zweiten Träger entsprechen, der nur den Kopf bei dem gleichen Wechsel der Blickrichtung drehen würde.

**13.** Verfahren nach Anspruch 11 oder 12, wobei die zwei Referenzvorderseiten in dem Unterschritt /5-3/ jeweils mit einem Koeffizienten der Linearkombination vermischt werden, der proportional zu einer Abweichung zwischen dem entsprechenden Referenzwert der Verstärkung und dem Wert der Verstärkung ist, die für den Träger berechnet wird.

**14.** Verfahren nach einem der Ansprüche 11 bis 13, wobei das Optimieren des Unterschrittes /5-5/ durchgeführt wird, indem dem fiktiven Testglas anfänglich eine Rückseite zugeordnet wird, die um eine Abweichung zwischen der Vorderseite des halbfertigen Glases ($S_{ANT}$) und der Vorderseite des fiktiven Zielglases korrigiert wird.

**15.** Verfahren nach einem der Ansprüche 11 bis 14, wobei das fiktive Zielglas in dem Unterschritt /5-4/ mit einem Grundwert der Vorderseite ($S_{ANT}$), der von einem Grundwert verschieden ist, der für das halbfertige Glas in Abhängigkeit von einem Wert der optischen Leistung, der für den Träger für die Weitsicht verschrieben wird, ausgewählt wird, derart definiert wird, um optische Aberrationen des hergestellten Brillenglases zu minimieren.

**16.** Verfahren nach einem der vorhergehenden Ansprüche, wobei das Glas geeignet ist, um eine Presbyopie des Trägers zu korrigieren.

**Claims**

**1.** Process for producing an ophthalmic eyeglass (1) for a pair of spectacles intended for an identified wearer, said eyeglass having an anterior face ($S_{ANT}$) and a posterior face ($S_{POST}$) each able to provide an addition, said process comprising the following steps:

> /1/ obtaining an optical-power addition value to be provided by the eyeglass between a far-vision point (VL) and a near-vision point (VP) of said eyeglass, which value is the value prescribed to the wearer; and
> /2/ characterizing relative amplitudes of the respective movements of the eyes and head of the wearer made during a change of the gaze direction of said wearer;

and being such that it furthermore comprises the following steps:

> /3/ determining a characteristic that varies depending on a distribution of the addition of said eyeglass between the anterior and posterior faces ($S_{ANT}$, $S_{POST}$), and that is perceived differently by the wearer depending on whether said wearer turns rather his head or his eyes during a change of gaze direction;
> /4/ depending on the relative amplitudes of the respective movements of the eyes and head of the wearer, which relative amplitudes are **characterized in** step /2/, selecting addition values intended for the anterior face ($S_{ANT}$) and posterior face ($S_{POST}$) of the eyeglass, respectively, said addition values of said faces being adapted so that the eyeglass has substantially the prescribed addition value, and so that the characteristic determined in step /3/ is adapted to the wearer; and
> /5/ manufacturing the eyeglass with anterior and posterior faces ($S_{ANT}$, $S_{POST}$) that possess the addition values selected in step /4/ for each of said faces,

said process being **characterized in that** the characteristic determined in step /3/ is a variation in a magnification for the various gaze directions of the wearer through said eyeglass.

**2.** Process according to Claim 1, wherein, when the relative amplitude of the head movements of the wearer, which relative amplitude is **characterized in** step /2/, is higher, the addition values that are selected for the anterior face ($S_{ANT}$) and posterior face ($S_{POST}$) of the eyeglass in step /4/ are suitable for decreasing said variation in the magnification relative to a value of said magnification variation that would be obtained, for an identical eyeglass optical power at the far-vision point and an identical prescribed addition value, if the relative amplitude of the head movements were lower.

**3.** Process according to Claim 1 or 2, wherein the characteristic determined in step /3/ is a variation in the magnification for the gaze directions of the wearer passing through said eyeglass at the far-vision point (VL) and the near-vision point (VP), respectively.

4. Process according to Claim 3, wherein, when the relative amplitude of the head movements of the wearer, which relative amplitude is **characterized in** step /2/, is higher, the addition value that is selected for the anterior face ($S_{ANT}$) of the eyeglass in step /4/ is smaller than an addition value that would be selected for the anterior face, for an identical eyeglass optical power at the far-vision point and an identical prescribed addition value, if the relative amplitude of the head movements were smaller.

5. Process according to any one of Claims 2 to 4, wherein the addition value that is selected for the anterior face ($S_{ANT}$) of the eyeglass is lower than the addition value of the eyeglass prescribed to the wearer, at least when the relative amplitude of the head movements of the wearer, which relative amplitude is **characterized in** step /2/, is higher than or equal to the corresponding relative amplitude of the eye movements and when the addition of the eyeglass prescribed to the wearer is higher than or equal to 1 dioptre.

6. Process according to any one of the preceding claims, wherein step /2/ comprises a gain calculation for an "eye/head" movement coordination test carried out by the wearer, said gain depending on an angular deviation of the head of the wearer ($\alpha_T$) divided by an angular eccentricity (E) of a target looked at by said wearer, and wherein the calculated gain is used in step /4/ to select the addition values intended for the anterior face ($S_{ANT}$) and the posterior face ($S_{POST}$) of the eyeglass, respectively.

7. Process according to Claim 6, wherein the gain is equal to the angular deviation of the head of the wearer ($\alpha_T$) divided by the angular eccentricity (E) of the target looked at by said wearer.

8. Process according to Claim 6 or 7, wherein step /4/ is executed using a mathematical formula relating, on the one hand, a parameter of distribution of the addition of the eyeglass between the anterior and posterior faces ($S_{ANT}$, $S_{POST}$) and, on the other hand, the calculated gain.

9. Process according to Claim 8, wherein the mathematical formula corresponds to a continuous function determining the parameter of distribution of the addition of the eyeglass between the anterior and posterior faces ($S_{ANT}$, $S_{POST}$) from the calculated gain and, optionally, from the prescribed addition value of the eyeglass.

10. Process according to Claim 6 or 7, wherein step /4/ is executed using a reference table having two inputs, said table indicating addition values of one of the anterior or posterior faces ($S_{ANT}$, $S_{POST}$) of the eyeglass for pairs of respective values of the addition of the eyeglass prescribed to the wearer and of the calculated gain, forming the two inputs of the table.

11. Process according to any one of Claims 6 to 10, wherein step /5/ itself comprises the following substeps:

/5-1/ selecting a semi-finished eyeglass having an anterior face ($S_{ANT}$) possessing the addition value selected in step /4/ for said anterior face, and possessing a batch design;
/5-2/ obtaining two reference anterior faces corresponding respectively to two reference gain values for the "eye/head" movement coordination test, and each possessing the addition value prescribed to the wearer;
/5-3/ calculating an anterior face of a target model eyeglass by mixing said two reference anterior faces, the proportions of said mixture depending on the gain calculated for the wearer relative to the two reference gain values;
/5-4/ defining a target model eyeglass by associating the mixed anterior face with a model posterior face possessing uniform values of sphere and cylinder, said values of sphere and cylinder being selected so that said target model eyeglass possesses an optical power at the far-vision point that is substantially equal to a value prescribed to the wearer;
/5-5/ by calculation, optimizing a trial model eyeglass having, immutably, the anterior face ($S_{ANT}$) of the semi-finished eyeglass selected in substep /5-1/, and having a variable posterior face, so that said trial model eyeglass has optical characteristics substantially equal to the characteristics of the target model eyeglass; and
/5-6/ producing the posterior face ($S_{POST}$) of the selected semi-finished eyeglass in accordance with the posterior face of the optimized trial model eyeglass.

12. Process according to Claim 11, wherein the reference gain values used in substep /5-2/ correspond to a first wearer who turns only his eyes when making a change of gaze direction, and to a second wearer who turns only his head when making the same change of gaze direction, respectively.

13. Process according to Claim 11 or 12, wherein the two reference anterior faces are each mixed in substep /5-3/ with a linear combination coefficient proportional to a difference between the corresponding reference gain value and the value of the gain calculated for the wearer.

14. Process according to any one of Claims 11 to 13, wherein the optimization of substep /5-5/ is carried out by initially attributing to the trial model eyeglass a posterior face corrected for a difference between the anterior face ($S_{ANT}$) of the semi-finished eyeglass and the anterior face of the target model eyeglass.

15. Process according to any one of Claims 11 to 14, wherein the target model eyeglass is defined in substep /5-4/ with an anterior-face ($S_{ANT}$) base-curve value different from a base-curve value selected for the semi-finished eyeglass depending on an optical power value prescribed to the wearer for far vision, so as to minimise the optical aberrations of the produced ophthalmic eyeglass.

16. Process according to any one of the preceding claims, wherein the eyeglass is suitable for correcting a presbyopia of the wearer.

FIG. 1a

FIG. 1b

**FIG. 2A**

**FIG. 2B**

Gain G

| Addition prescrite A (dioptries) | 0 | 0,1 | 0,2 | 0,3 | 0,4 | 0,5 | 0,6 | 0,7 | 0,8 | 0,9 | 1 |
|---|---|---|---|---|---|---|---|---|---|---|---|
| 0,75 | 2,75 | 2,50 | 2,00 | 1,50 | 1,00 | 0,75 | 0,75 | 0,75 | 0,75 | 0,75 | 0,75 |
| 1,00 | 2,75 | 2,50 | 2,00 | 1,50 | 1,00 | 0,75 | 0,75 | 0,75 | 0,75 | 0,75 | 0,75 |
| 1,25 | 2,75 | 2,50 | 2,00 | 1,50 | 1,00 | 0,75 | 0,75 | 0,75 | 0,75 | 0,75 | 0,75 |
| 1,50 | 3,00 | 2,50 | 2,25 | 1,75 | 1,00 | 0,75 | 0,75 | 0,75 | 0,75 | 0,75 | 0,75 |
| 1,75 | 3,00 | 2,50 | 2,25 | 1,75 | 1,00 | 0,75 | 0,75 | 0,75 | 0,75 | 0,75 | 0,75 |
| 2,00 | 3,00 | 2,75 | 2,50 | 2,00 | 1,25 | 1,00 | 0,75 | 0,75 | 0,75 | 0,75 | 0,75 |
| 2,25 | 3,25 | 3,00 | 2,50 | 2,00 | 1,25 | 1,25 | 1,00 | 1,00 | 0,75 | 0,75 | 0,75 |
| 2,50 | 3,25 | 3,25 | 2,75 | 2,00 | 1,50 | 1,25 | 1,25 | 1,00 | 1,00 | 0,75 | 0,75 |
| 2,75 | 3,50 | 3,50 | 3,00 | 2,25 | 1,50 | 1,50 | 1,25 | 1,25 | 1,00 | 1,00 | 0,75 |
| 3,00 | 3,50 | 3,50 | 3,25 | 2,25 | 2,00 | 1,75 | 1,75 | 1,75 | 1,50 | 1,50 | 1,50 |
| 3,25 | 4,00 | 3,50 | 3,50 | 2,50 | 2,50 | 2,25 | 2,25 | 2,25 | 2,00 | 2,00 | 2,00 |
| 3,50 | 4,00 | 4,00 | 3,50 | 3,00 | 3,00 | 2,75 | 2,75 | 2,75 | 2,50 | 2,50 | 2,50 |

FIG. 3

EP 2 188 666 B1

VERRE 1 (G=O) - FACE ANTERIEURE
CYLINDRE

**FIG. 4b**

VERRE 1 (G=O) - FACE ANTERIEURE
SPHERE

**FIG. 4a**

VERRE 1 (G=O) - FACE POSTERIEURE
SPHERE

FIG. 4c

VERRE 1 (G=O) - FACE POSTERIEURE
CYLINDRE

FIG. 4d

VERRE 5 (G=1)
PUISSANCE OPTIQUE

FIG. 5e

VERRE 1 (G=0)
PUISSANCE OPTIQUE

FIG. 4e

FIG. 5b

VERRE 5 (G=1) - FACE ANTERIEURE
CYLINDRE

FIG. 5a

VERRE 5 (G=1) - FACE ANTERIEURE
SPHERE

VERRE 5 (G=1) - FACE POSTERIEURE
CYLINDRE

X en MM

Y en MM

**FIG. 5d**

VERRE 5 (G=1) - FACE POSTERIEURE
SPHERE

X en MM

Y en MM

**FIG. 5c**

VERRE 6 (G=0) - FACE ANTERIEURE
SPHERE

FIG. 6a

VERRE 6 (G=0) - FACE ANTERIEURE
CYLINDRE

FIG. 6b

EP 2 188 666 B1

VERRE 6 (G=0) - VERRE FICTIF DE CIBLE
PUISSANCE OPTIQUE

FIG. 7b

VERRE 6 (G=0) - VERRE FICTIF INITIAL
PUISSANCE OPTIQUE

FIG. 7a

VERRE 6 (G=0) - VERRE REALISE
ASTIGMATISME RESULTANT

FIG. 8b

VERRE 6 (G=0) - VERRE REALISE
PUISSANCE OPTIQUE

FIG. 8a

VERRE 7 (G=1) - VERRE REALISE
ASTIGMATISME RESULTANT

FIG. 9b

VERRE 7 (G=1) - VERRE REALISE
PUISSANCE OPTIQUE

FIG. 9a

**EP 2 188 666 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2006072683 A1